# EUROPEAN PATENT APPLICATION

(11) **EP 4 815 630 A1**
(43) Date of publication of application: **30.09.2026**
(21) Application number: 24894692.3
(22) Date of filing: 22.11.2024
(51) Int. Cl.: H05B 45/37, H05B 47/155, H05B 47/16

(54) **REAR COMBINATION LAMP AND CONTROL METHOD THEREOF**

(30) Priority: 22.11.2023 KR 20230163223
(71) Applicant: LX Semicon Co., Ltd., Daejeon 34027 (KR)
(72) Inventor: CHO, Hoo Hyun, Daejeon 34027 (KR); YOON, Jang Hyun, Daejeon 34027 (KR)
(74) Representative: Ter Meer und Partner mbB
(86) International application number: PCT/KR2024/018649
(87) International publication number: WO 2025/110801

(57) **Abstract**

A rear combination lamp device according to an embodiment may comprise: a rear combination lamp including multiple LED modules each having multiple LED channels; a converter for converting a voltage supplied in response to a direction indication signal into an output voltage and an internal voltage, supplying the output voltage to the LED modules, and supplying the internal voltage to a control unit; and the control unit for performing control such that when the internal voltage is supplied to sequentially turn on the multiple LED channels of a first LED module, the multiple LED channels of a next LED module are sequentially turned on based on the lighting situation of the sequentially turned-on LED channels.

## Description

### Technical Field

An embodiment relates to a rear combination lamp, and more particularly, to a rear combination lamp capable of sequential turn-on control.

### Background Art

In general, a vehicle includes rear combination lamps at both rear sides.

The rear combination lamp includes a turn signal lamp, a brake lamp, a tail lamp, a reverse lamp, and the like, and is used as a means for informing a driver of another vehicle following behind of a driving intention and a driving state of a subject vehicle.

Recently, due to rapid development of high-luminance LEDs (Light Emitted Diodes), rear combination lamps and head lamps employing LEDs have been developed. As LEDs are employed as a light source, designs of rear combination lamps are diversified, and according to the diversification of the designs, the number of LEDs included in the rear combination lamp is also increasing.

Conventionally, the rear combination lamp is sequentially turned on through counting of a preset delay time. However, in order to implement sequential turn-on, there is an inconvenience in that a delay time should be preset for each IC for rear sequential turn-on.

In addition, conventionally, a separate memory for storing a program in which the delay time is programmed is required, thereby increasing cost due to an addition of configuration.

### Disclosure

### Technical Problem

In order to solve the above problems, an embodiment has an object to provide a rear combination lamp and a method for controlling the same for stably performing sequential turn-on of the rear combination lamp without separate programming.

### Technical Solution

In order to achieve the above object, a rear combination lamp device according to an embodiment may include a rear combination lamp including a plurality of LED modules each having a plurality of LED channels; a converter configured to convert a voltage supplied in response to a turn indication signal into an output voltage and an internal voltage, to supply the output voltage to the plurality of LED modules, and to supply the internal voltage to a controller; and the controller configured to, when the plurality of LED channels of a first LED module are sequentially turned on by the internal voltage being supplied, control the plurality of LED channels of a next LED module to be sequentially turned on based on a turn-on state of the sequentially turned-on LED channels.

The controller may monitor the turn-on state of the LED channels based on a duty ratio of the sequentially turned-on LED channels.

The controller may monitor the turn-on state of the LED channels based on a voltage or a current magnitude or a voltage/current pattern replacing the duty ratio of the sequentially turned-on LED channels.

The controller may control the plurality of LED channels of the next LED module to be sequentially turned on when a duty ratio of the LED channel is different from a duty ratio of a previously turned-on LED channel.

The controller may control the plurality of LED channels of the next LED module to be sequentially turned on when a voltage or a current of the LED channel is different from a voltage or a current or a voltage/current pattern of a previously turned-on LED channel.

The controller may include a first interface mounted on the plurality of LED modules and configured to monitor a turn-on state of the sequentially turned-on LED channels; and a second interface mounted on the plurality of LED modules and configured to determine a turn-on order of the plurality of LED modules.

The controller may be configured to apply different voltages to the second interfaces respectively mounted on the plurality of LED modules, and determine the turn-on order of the plurality of LED modules according to a magnitude of the voltages.

In addition, in order to achieve the above object, a method for controlling a rear combination lamp device according to an embodiment may include monitoring a turn-on state of sequentially turned-on LED channels of an LED module; and controlling a plurality of LED channels of a next LED module to be sequentially turned on based on the turn-on state of the sequentially turned-on LED channels.

The turn-on state of the LED channels may be monitored based on a duty ratio of the sequentially turned-on LED channels.

The duty ratio of the sequentially turned-on LED channels may be replaced with a voltage or a current magnitude or a voltage/current pattern, and the turn-on state of the LED channels may be monitored based on the replaced voltage or current magnitude or voltage/current pattern.

The plurality of LED channels of the next LED module may be controlled to be sequentially turned on when a duty ratio of the LED channel is different from a duty ratio of a previously turned-on LED channel.

The plurality of LED channels of the next LED module may be controlled to be sequentially turned on when a voltage or a current of the LED channel is different from a voltage or a current or a voltage/current pattern of a previously turned-on LED channel.

The method may further include determining a turn-on order of the plurality of LED modules.

Different voltages may be applied to second interfaces respectively mounted on the plurality of LED modules, and the turn-on order of the plurality of LED modules may be determined according to a magnitude of the voltages.

### Advantageous Effects

According to an embodiment, the rear combination lamp can be stably sequentially turned on without a separate programming operation.

In addition, according to an embodiment, by removing a storage means required for storing a program, an entire configuration can be simplified and cost can be reduced.

### Description of Drawings

FIG. 1 is an exemplary diagram of a turn signal lamp to which a rear combination lamp device according to an embodiment is applied.
FIG. 2 is a circuit diagram illustrating a rear combination lamp device according to an embodiment.
FIGS. 3 and 4 are circuit diagrams illustrating a configuration of a first interface of a rear combination lamp device according to an embodiment.
FIG. 5 is a timing diagram for explaining an operation of a first interface of a rear combination lamp device according to an embodiment.
FIG. 6 is a flowchart illustrating a control method of a rear combination lamp device according to an embodiment.
FIG. 7 is a flowchart for explaining a detailed control method of a rear combination lamp device according to an embodiment.
FIG. 8 is a timing diagram for explaining a detailed control method of a rear combination lamp device according to an embodiment.

### Mode for Invention

Hereinafter, preferred embodiments of the present invention will be described in detail with reference to the accompanying drawings. Terms used in the present specification and claims are not to be construed as being limited to conventional or dictionary meanings, but should be construed as meanings and concepts consistent with the technical aspects of the present invention.

The embodiments described in the present specification and configurations illustrated in the drawings are preferred embodiments of the present invention, and do not represent all technical ideas of the present invention, and thus various equivalents and modifications capable of substituting them at the time of filing of the present application may exist.

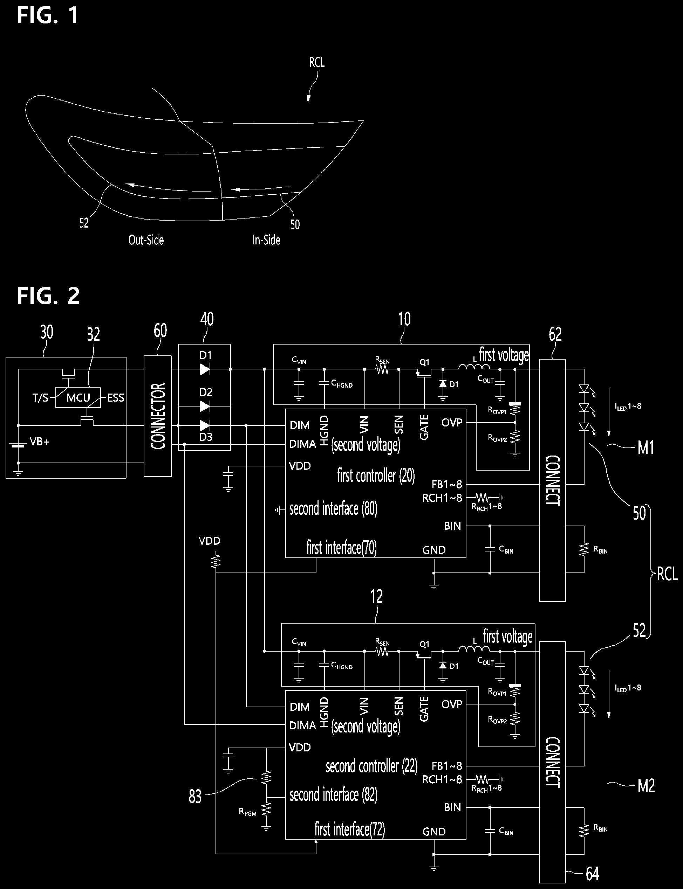

FIG. 1 is an exemplary diagram of a turn signal lamp to which a rear combination lamp device according to an embodiment is applied.

Referring to FIG. 1, a rear combination lamp RCL may be classified into a type provided only in a vehicle body and a type distributed in a vehicle body and a trunk according to a vehicle type.

An embodiment may be applied to a type in which the rear combination lamp RCL is distributed in a vehicle body and a trunk. In addition, an embodiment may also be applied to a rear combination lamp RCL in which LED modules 50, 52 are applied only to a vehicle body, that is, a rear combination lamp RCL in which a plurality of LED modules are applied due to a requirement of a large number of LEDs.

Of course, the present invention is not limited thereto. The LED module 50 may correspond to an inside corresponding to a trunk of a vehicle, and the LED module 52 may correspond to an outside corresponding to a vehicle body.

FIG. 2 is a circuit diagram illustrating a rear combination lamp device according to an embodiment.

Referring to FIG. 2, the rear combination lamp device according to an embodiment may include a first module IC M1 and a second module IC M2.

The first module IC M1 may include a first LED module 50, a first converter 10, and a first controller 20. The second module IC M2 may include a second LED module 52, a second converter 12, and a second controller 22. The first LED module 50 and the second LED module 52 may configure a rear combination lamp RCL.

The first LED module 50 may have a plurality of LED channels. The first controller 20 exemplarily drives eight LED channels.

A vehicle controller 2 including an MCU (Micro Controller Unit) 32 may control a battery voltage VB to be transmitted to the first converter 10 in response to a turn indication signal T/S, and may control the battery voltage VB to be transmitted to the first converter 10 in response to an emergency stop signal ESS.

A path unit 40 through which the battery voltage VB is transmitted via a first connector 60 between a vehicle controller 30 and the first converter 10 and the first controller 20, and through which a dimA signal DIMA is transmitted from the first connector 60 to the first controller 20 is provided.

The first converter 10 generates an output voltage VOUT and an internal voltage VIN using the supplied battery voltage VB, supplies the output voltage VOUT to the first LED module 50 through a second connector 62, and supplies the internal voltage VIN to the first controller 20. For example, the first converter 10 may use a buck converter.

When the internal voltage VIN is supplied from the first converter 10 in a deactivated state of the dimA signal DIMA, the turn-on state of the first LED module 50 may be monitored, and the second LED module 52 may be sequentially turned on based on the turn-on state of the first LED module 50.

The first controller 20 may include switching elements (not shown) configured to form or cut off a current path between feedback voltage terminals FB1 to FB8 and channel resistor terminals RCH1 to RCH8 of first to eighth channels CH1 to CH8. These switching elements are sequentially turned on to form current paths between the feedback voltage terminals FB1 to FB8 and the channel resistor terminals RCH1 to RCH8, thereby sequentially turning on the first to eighth channels of the first LED module 50.

Here, VIN is an internal voltage for operation of the first controller 20, SEN is a sensing voltage used for level determination of the internal voltage VIN and counting synchronization, and GATE is a control signal for regulation of the output voltage VOUT. The GATE may be provided as a PWM (Pulse Width Modulation) signal.

In the embodiment configured as described above, when the battery voltage VB is transmitted to the first converter 10 in response to the turn indication signal T/S, the first converter 10 may supply the internal voltage VIN to the first controller 20 and supply the output voltage VOUT to the first LED module 50.

The first controller 20 receives the dimA signal DIMA, and may selectively control the first to eighth channels to be sequentially turned on or simultaneously blinked according to a logic state of the dimA signal DIMA. That is, the first controller 20 may perform control by distinguishing the turn indication signal T/S and the emergency stop signal ESS according to the logic state of the dimA signal DIMA.

When the dimA signal DIMA is activated, the first controller 20 controls the first to eighth channels of the first LED module 50 to simultaneously blink by turning on and off switching elements that form or cut off current paths between the feedback voltage terminals FB1 to FB8 and the channel resistor terminals RCH1 to RCH8.

In the present embodiment, when the internal voltage VIN is supplied in a deactivated state of the dimA signal DIMA, the rear combination lamp RCL is sequentially turned on, and when the dimA signal DIMA is activated, the rear combination lamp RCL of a turn signal function is converted into an emergency blinking lamp function and operated.

When the turn-on of the first LED module 50 is completed, the second LED module 52 may be controlled to be turned on by the second controller 22.

The second converter 12 of the second module IC M2 may operate identically to the first converter 10 of the first module IC M1.

Meanwhile, the first controller of the rear combination lamp device according to an embodiment may include a first interface and a second interface. The first interface and the second interface may also be provided in the second controller.

When three or more controllers are provided, the first interface and the second interface may be respectively provided in each controller.

The first interface 70 may monitor a turn-on state between LED modules. The first interface 70 may monitor a turn-on state of LED channels of the first LED module 50. The first interface 70 may monitor the turn-on state based on a duty ratio of the LED channels of the first LED module 50. The first interface 70 may monitor the turn-on state based on a voltage or a current or a voltage/current pattern applied to the LED channels of the first LED module 50.

More specifically, the first interface 70 may monitor the turn-on state based on whether a voltage applied to the LED channels is different.

Alternatively, the first interface 70 may monitor the turn-on state based on whether a current measured at the LED channels is different.

Alternatively, the first interface 70 may monitor the turn-on state based on whether a voltage or a current pattern measured at the LED channels is different.

Hereinafter, a process of monitoring the turn-on state based on a duty ratio of the LED channels will be described.

Duty ratios of LED channels except for a last LED channel may be identical. For example, a duty ratio of the last turned-on LED channel may be greater than a duty ratio of a previously turned-on LED channel.

The first interface 70 may recognize that all LED channels of the first LED module 50 are turned on based on the duty ratio of the last turned-on LED channel of the first LED module 50.

Alternatively, the first interface 70 may set a reference duty ratio, and may recognize that the last LED channel is turned on when a duty ratio of the LED channel deviates from the reference duty ratio.

The first interface 72 provided in the second controller 22 may monitor that the last LED channel of the first LED module 50 is turned on, and may control the second LED module 52 to be sequentially turned on.

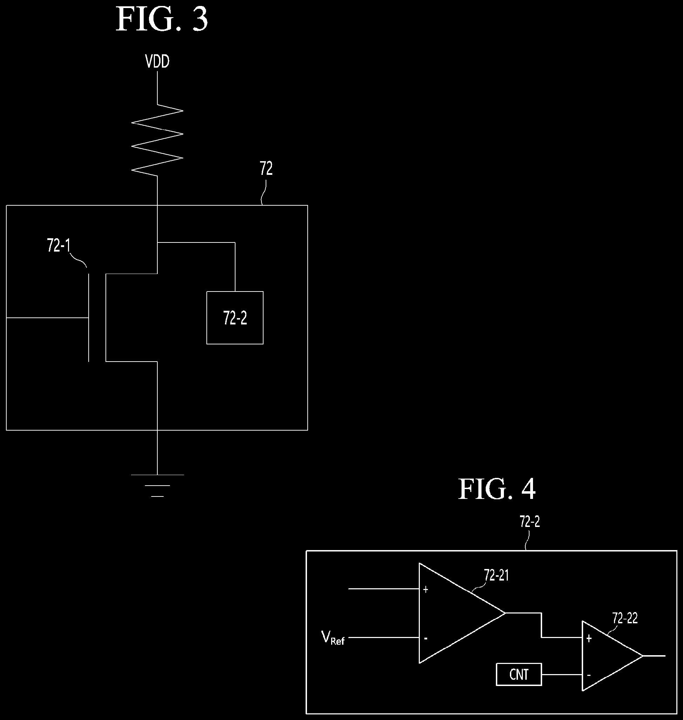

FIGS. 3 and 4 are circuit diagrams illustrating a configuration of a first interface of a rear combination lamp device according to an embodiment.

Referring to FIGS. 3 and 4, the first interface 72 may include a transistor 72-1 and a comparator 72-2. The transistor 72-1 may receive a turn-on state of an LED channel as a waveform. The comparator 72-2 may include a first comparator 72-21 and a second comparator 72-22, and may detect the turn-on state of the LED channel.

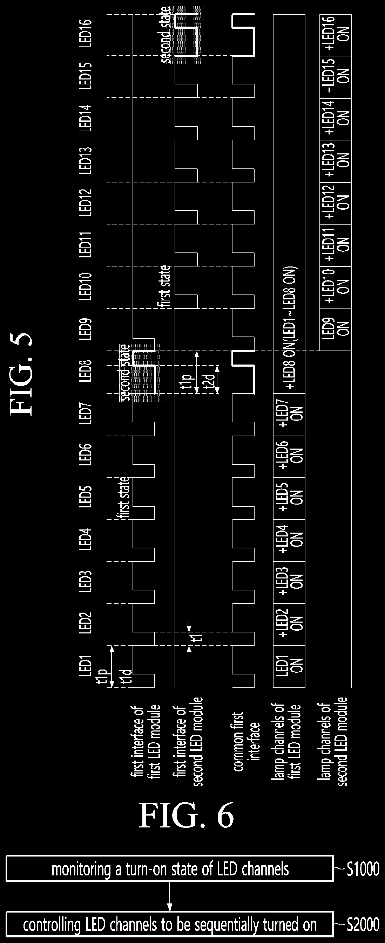

FIG. 5 is a timing diagram for explaining an operation of a first interface of a rear combination lamp device according to an embodiment.

Referring to FIG. 5, when LED channels of a first LED module are sequentially turned on, the first interface of the first LED module may check the turn-on state of the LED channels. When the turn-on state is confirmed based on a duty ratio of a last LED channel of the first LED module, the first interface of the second LED module may control LED channels of the second LED module to be sequently turned on.

Returning to FIG. 2, second interfaces 80, 82 may determine a turn-on order of LED modules 50, 52. For example, the turn-on order may be determined such that the second LED module is turned on after completion of turn-on of the first LED module.

For this purpose, a voltage applied to the second interface 80 mounted on the first controller 20 and a voltage applied to the second interface 82 provided in the second controller 22 may be configured to be different. For example, by using a fixed resistor, the voltage applied to the second interface 80 provided in the first controller 20 and the voltage applied to the second interface 82 provided in the second controller 22 may be set to be different.

FIG. 6 is a flowchart illustrating a control method of a rear combination lamp device according to an embodiment.

Referring to FIG. 6, when LED channels of a first LED module are sequentially turned on, a first interface of the first LED module and a first interface of the second LED module may monitor a turn-on state of the LED channels S1000.

The first interface of the second LED module may control LED channels of the second LED module to be sequentially turned on when the LED channels of the first LED module are in a turned-on state based on a duty ratio of the LED channels S2000.

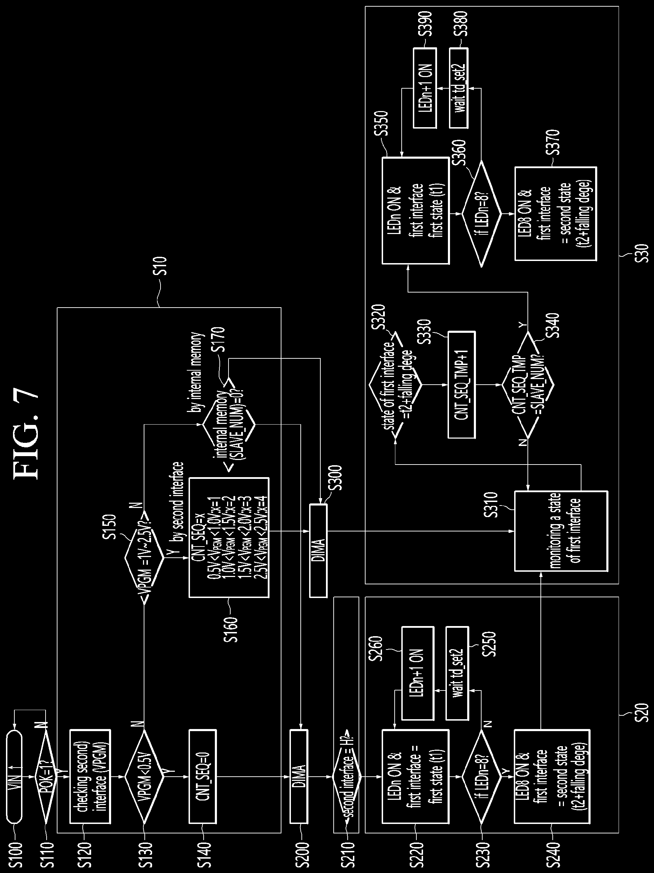

FIG. 7 is a flowchart for explaining a detailed control method of a rear combination lamp device according to an embodiment.

Referring to FIG. 7, when an internal voltage VIN is supplied to the rear combination lamp device S100, a POK signal may be generated S110. Subsequently, a state VPGM of the second interface may be checked S120.

Subsequently, it may be checked whether an input voltage input to the second interface is equal to or less than 0.5 V S130. When the input voltage input to the second interface is equal to or less than 0.5 V, a counter value may be set to 0 S140. From this, it may be recognized that the first LED module is in a first turn-on order.

On the other hand, when the input voltage input to the second interface exceeds 0.5 V, it may be checked whether 1 V to 2.5 V is input to the second interface based on the state of the second interface S150.

A next LED module to be turned on may be determined according to the voltage input to the second interface S160. On the other hand, when the input to the second interface exceeds 2.5 V from the state of the second interface, a turn-on order of the LED modules may be determined through an internal memory S170.

When a dimA signal is received S200, it may be checked whether the second interface of the first controller is a high signal S210. When the second interface is a high signal, LED channels of the first module may be sequentially turned on. The first interface may monitor a turn-on state, a first state, of the LED channels S220.

It may be checked whether a last LED channel is turned on S230. When the first interface becomes a second state, it may be confirmed that turn-on of the last LED channel of the first LED module is completed S230. On the other hand, when the first interface is in the first state, a next LED channel may be turned on after a predetermined time S250, S260.

The second controller may monitor a state of the first interface S310. The second controller may check the state of the first interface S320.

The second controller may compare whether a count number of the second state is the same as a counter value set by the second interface S330, S340.

When the count number of the second state and the counter value set by the second interface are the same, the state of the first interface of the second controller may be checked. The second controller may check a first state in which LED channels are turned on through the first interface S350, and when the last LED channel is turned on, it may be checked whether the state of the first interface is a second state S370.

In the same manner, when more LED modules such as a third LED module and a fourth LED module exist, the LED modules may be sequentially turned on according to the above-described order.

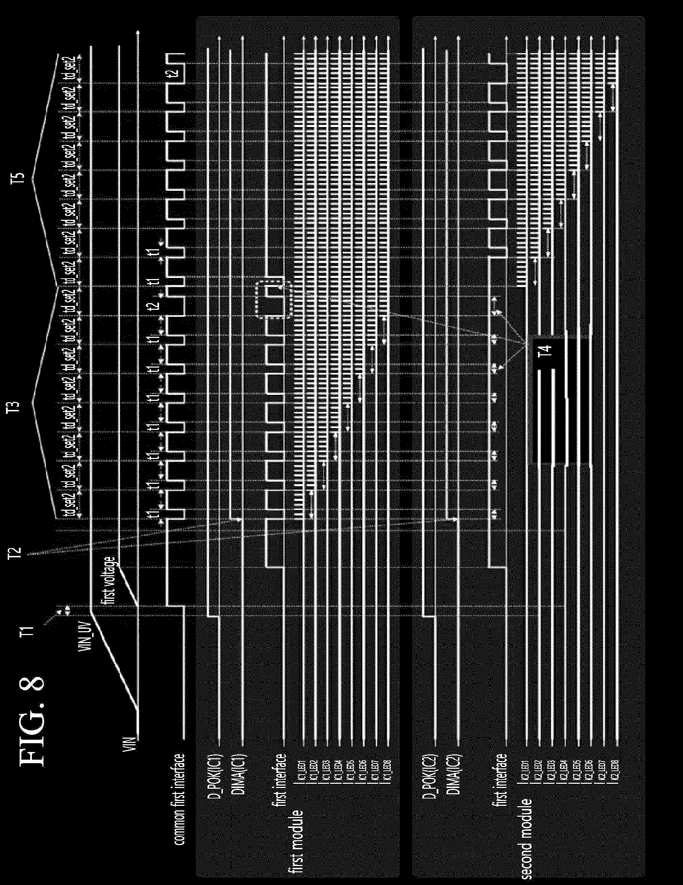

FIG. 8 is a timing diagram for explaining a detailed control method of a rear combination lamp device according to an embodiment.

Referring to FIG. 8, when an internal voltage VIN is supplied to the rear combination lamp device, in a first section T1, a turn-on order of LED modules may be determined. The turn-on order of the LED modules may be determined through a second interface, and when a state of the second interface deviates from a predetermined range, the turn-on order may also be determined through an internal memory.

In a second section T2, when a dimA signal DIMA is input, LED channels start to be turned on, and a first interface may start monitoring.

In a third section T3, LED channels of a first LED module may perform sequential turn-on.

In a fourth section T4, sequential turn-on of the LED channels may be performed based on a timing point at which a state change occurs after a second state by monitoring a state of the first interface.

In a fifth section T5, LED channels of a second LED module may perform sequential turn-on.

Although the above has been described with reference to the drawings and embodiments, it will be understood by those skilled in the art that various modifications and changes may be made without departing from the technical concept of the embodiments described in the claims below.

## Claims

1. A rear combination lamp device, comprising:
a rear combination lamp including a plurality of LED modules each having a plurality of LED channels;
a converter configured to convert a voltage supplied in response to a turn indication signal into an output voltage and an internal voltage, to supply the output voltage to the plurality of LED modules, and to supply the internal voltage to a controller; and
the controller configured to, when the plurality of LED channels of a first LED module are sequentially turned on by the internal voltage being supplied, control the plurality of LED channels of a next LED module to be sequentially turned on based on a turn-on state of the sequentially turned-on LED channels.

2. The rear combination lamp device of claim 1, wherein the controller is configured to monitor the turn-on state of the LED channels based on a duty ratio of the sequentially turned-on LED channels.

3. The rear combination lamp device of claim 2, wherein the controller is configured to monitor the turn-on state of the LED channels based on a voltage or a current magnitude or a voltage/current pattern replacing the duty ratio of the sequentially turned-on LED channels.

4. The rear combination lamp device of claim 2, wherein the controller is configured to control the plurality of LED channels of the next LED module to be sequentially turned on when a duty ratio of the LED channel is different from a duty ratio of a previously turned-on LED channel.

5. The rear combination lamp device of claim 3, wherein the controller is configured to control the plurality of LED channels of the next LED module to be sequentially turned on when a voltage or a current of the LED channel is different from a voltage or a current or a voltage/current pattern of a previously turned-on LED channel.

6. The rear combination lamp device of claim 1, wherein the controller comprises:
a first interface mounted on the plurality of LED modules and configured to monitor a turn-on state of the sequentially turned-on LED channels; and
a second interface mounted on the plurality of LED modules and configured to determine a turn-on order of the plurality of LED modules.

7. The rear combination lamp device of claim 6, wherein the controller is configured to apply different voltages to the second interfaces respectively mounted on the plurality of LED modules, and determine the turn-on order of the plurality of LED modules according to a magnitude of the voltages.

8. A method for controlling a rear combination lamp device, comprising:
monitoring a turn-on state of sequentially turned-on LED channels of an LED module; and
controlling a plurality of LED channels of a next LED module to be sequentially turned on based on the turn-on state of the sequentially turned-on LED channels.

9. The method of claim 8, wherein the turn-on state of the LED channels is monitored based on a duty ratio of the sequentially turned-on LED channels.

10. The method of claim 9, wherein the duty ratio of the sequentially turned-on LED channels is replaced with a voltage or a current magnitude or a voltage/current pattern, and the turn-on state of the LED channels is monitored based on the replaced voltage or current magnitude or voltage/current pattern.

11. The method of claim 9, wherein the plurality of LED channels of the next LED module are controlled to be sequentially turned on when a duty ratio of the LED channel is different from a duty ratio of a previously turned-on LED channel.

12. The method of claim 10, wherein the plurality of LED channels of the next LED module are controlled to be sequentially turned on when a voltage or a current of the LED channel is different from a voltage or a current or a voltage/current pattern of a previously turned-on LED channel.

13. The method of claim 6, further comprising determining a turn-on order of the plurality of LED modules.

14. The method of claim 13, wherein different voltages are applied to second interfaces respectively mounted on the plurality of LED modules, and the turn-on order of the plurality of LED modules is determined according to a magnitude of the voltages.
